# FASCICULE DE BREVET EUROPEEN

(11) **EP 4 395 971 B1**
(45) Date de publication et mention de la délivrance du brevet: **02.07.2025**
(21) Numéro de dépôt: 22773278.1
(22) Date de dépôt: 25.08.2022
(51) Int. Cl.: B29B 11/16, F16C 7/02

(54) **OUTILLAGE POUR L'ENROULEMENT D'UNE TEXTURE FIBREUSE ET PROCÉDÉ D'ENROULEMENT ASSOCIÉ**
MASCHINE ZUM WICKELN EINES TEXTURIERTEN FASERMATERIALS UND ZUGEHÖRIGES WICKELVERFAHREN
MACHINERY FOR WINDING A FIBROUS TEXTURED MATERIAL, AND ASSOCIATED WINDING METHOD

(30) Priorité: 03.09.2021 FR 2109247
(43) Date de publication de la demande: 10.07.2024
(73) Titulaire: SAFRAN, 75015 Paris (FR); Safran Landing Systems, 78140 Vélizy-Villacoublay (FR)
(72) Inventeur: LECLERCQ, Sylvain, Didier, 77550 Moissy-Cramayel (FR); ROIRAND, Quentin, 77550 Moissy-Cramayel (FR); COUPE, Dominique, Marie, Christian, 77550 Moissy-Cramayel (FR); CHAUVIN, Thierry, Patrick, 77550 Moissy-Cramayel (FR); TRAN, Nicolas, 77550 Moissy-Cramayel (FR)
(74) Mandataire: Cabinet Beau de Loménie
(86) Numéro de dépôt international: PCT/FR2022/051609
(87) Numéro de publication internationale: WO 2023/031541

(56) Documents cités:
- WO-A1-01/77771
- CN-A- 113 021 939
- CN-A- 113 043 621
- DE-A1- 102011 000 105
- FR-A1- 2 543 054
- FR-A1- 2 930 611
- US-A1- 2015 292 550

## Description

### Domaine Technique

La présente invention concerne un outillage pour l'enroulement d'une texture fibreuse, obtenue notamment par tissage tridimensionnel, afin d'obtenir une préforme fibreuse d'une pièce en matériau composite, ainsi qu'un procédé d'enroulement associé. L'invention s'applique à la fabrication de pièces utiles dans différents domaines et de formes variées, notamment à la fabrication de pièces d'aéronef, comme des pièces de train d'atterrissage ou de turbomachine.

### Technique antérieure

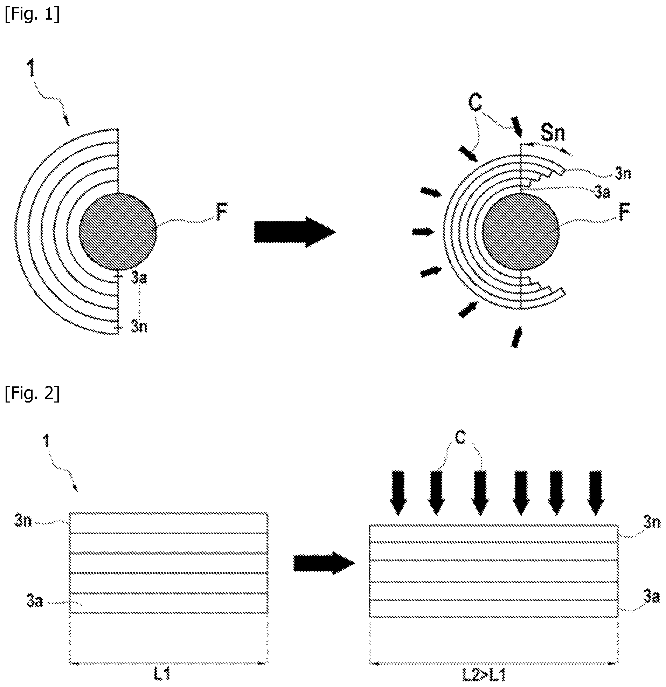

La fabrication de pièces en matériau composite par enroulement d'une texture fibreuse autour d'une forme et introduction subséquente d'un matériau de matrice dans la porosité de la texture est connue. A la sortie du métier à tisser, la texture fibreuse est « foisonnée », c'est-à-dire qu'elle présente un volume libre significatif de porosité non occupé par des fibres. La texture fibreuse foisonnée présente, en général, un taux volumique de fibres qui est inférieur au taux volumique de fibres souhaité dans la pièce finale. Une compaction de la texture enroulée est donc réalisée afin de réduire l'épaisseur de chacune des couches et augmenter ainsi le taux volumique de fibres à la valeur souhaitée. Néanmoins, des sur-longueurs de la texture sont générées lors de la compaction, qui aboutissent à des plissements de la texture (aussi appelés défauts de flambement local) lors de la conformation dans un moule d'injection lesquels peuvent dégrader la tenue aux efforts de la pièce en fonctionnement. Une illustration des sur-longueurs produites lors de la compaction est fournie aux figures 1 et 2. La figure 1 concerne le cas où la texture enroulée 1 a une géométrie localement circulaire. Selon cette configuration, les couches enroulées 3a-3n autour de la forme F reçoivent, lors de la compaction matérialisée par les flèches C, une sur-longueur qui augmente plus la couche est située vers l'extérieur de l'enroulement. Cette différence s'explique du fait de l'accroissement du périmètre des couches au fur et à mesure de l'enroulement. Ainsi, la sur-longueur Sn générée pour la couche externe 3n est maximale. La figure 2 illustre, quant à elle, la génération de sur-longueurs dans une préforme enroulée 1 ayant localement une forme rectiligne. Sur cette partie rectiligne, chaque couche enroulée 3a-3n reçoit une sur-longueur identique lors de la compaction C qui fait la passer d'une longueur L1 à une longueur L2 supérieure à L1. On connait CN 113 043 621 qui divulgue un procédé de formation d'un renfort annulaire et CN 113 021 939 qui divulgue un procédé de formation d'un composant basé sur des fibres continues et des fibres ordinaires.

Il est souhaitable de fournir un outillage pour l'enroulement d'une texture fibreuse et un procédé associé qui permette de réduire, voire de supprimer, la présence de défauts de plissement dans la texture compactée destinée à former le renfort fibreux de la pièce à obtenir.

### Exposé de l'invention

L'invention concerne un outillage pour l'enroulement d'une texture fibreuse, comprenant au moins un support sur lequel la texture fibreuse est destinée à être enroulée autour d'un premier axe d'enroulement, le support ayant au moins deux régions d'extrémité espacées le long d'un deuxième axe transversal au premier axe, caractérisé en ce qu'il comprend un dispositif de déplacement configuré pour modifier la forme du support entre une configuration rétractée et une configuration étendue en rapprochant progressivement ou en éloignant les régions d'extrémité le long du deuxième axe, et en ce qu'il comprend un premier dispositif de compaction apte à réaliser une compaction sur les régions d'extrémité au moins dans la configuration rétractée et un deuxième dispositif de compaction, distinct du premier dispositif de compaction, apte à réaliser une compaction sur une région centrale située entre les régions d'extrémité dans la configuration étendue.

L'invention propose un outillage permettant de rapprocher les régions d'extrémité au fur et à mesure de l'enroulement, c'est-à-dire à chaque tour de texture fibreuse ou fraction de tour de texture fibreuse, afin d'ajuster le périmètre de chaque couche enroulée à une valeur prédéterminée permettant de compenser les disparités de sur-longueurs générées pour les différentes couches lors de la compaction par le premier dispositif de compaction. Ainsi, la texture sera enroulée en réduisant, à chaque tour ou fraction de tour supplémentaire, la distance entre les régions d'extrémité pour tenir compte de l'augmentation des sur-longueurs générées lors de la compaction plus la couche est externe à l'enroulement (voir figure 1) jusqu'à atteindre pour le dernier tour une distance minimale correspondant à la configuration du support dite « rétractée ». Après la compaction par le premier dispositif de compaction dans la configuration rétractée, la distance entre les régions d'extrémité est augmentée jusqu'à passer dans la configuration dite « étendue » où les couches enroulées sont tendues en éliminant les plis avec éventuellement des zones de compactions locales, avec une distance entre les régions d'extrémité qui correspond sensiblement à une dimension finale de la pièce à obtenir. On procède alors à la compaction par le deuxième dispositif de compaction dans la région centrale afin de mettre en forme la texture dans cette région. On obtient ainsi après compaction une préforme de la pièce à obtenir au taux volumique de fibres souhaité et avec des défauts de plissement de la texture fortement réduits, voire entièrement dépourvue de tels défauts. L'invention s'applique à la fabrication de renfort fibreux délimitant un volume intérieur et formant un contour fermé, avantageusement à partir d'une texture fibreuse obtenue par tissage tridimensionnel. Comme il sera décrit plus bas, l'invention trouve un intérêt pour des géométries variées de pièces, telles que des pièces présentant une alternance entre des zones élancées, s'étendant sensiblement de manière rectiligne, et des zones courbées ou arrondies, ou encore pour des pièces de géométrie circulaire ou elliptique.

Dans un exemple de réalisation, chaque région d'extrémité comprend une extrémité distale et deux portions latérales situées de part et d'autre de l'extrémité distale et situées du côté de la région centrale, et dans laquelle le premier dispositif de compaction comprend un premier élément de compaction apte à réaliser la compaction sur l'extrémité distale de chaque région d'extrémité, et un deuxième élément de compaction apte à réaliser la compaction sur les portions latérales de chaque région d'extrémité avec une composante de compaction dirigée vers la région centrale.

L'application d'une composante de compaction dirigée vers la région centrale permet de favoriser le refoulement des sur-longueurs générées lors de la compaction des régions d'extrémité vers la région centrale afin de neutraliser davantage encore de plissements lors du passage dans la configuration étendue.

En particulier, le deuxième élément de compaction peut présenter au moins une face latérale qui fait un angle non nul avec la normale au support prise au niveau de cette face.

Une telle caractéristique participe avantageusement au refoulement des sur-longueurs générées lors de la compaction des régions d'extrémité vers la région centrale afin de neutraliser davantage encore de plissements lors du passage dans la configuration étendue.

Le premier dispositif de compaction peut être configuré pour réaliser la compaction par le deuxième élément de compaction après réalisation de la compaction par le premier élément de compaction.

La réalisation de la compaction sur les régions d'extrémité de manière séquentielle, d'abord sur l'extrémité distale puis sur les portions latérales, permet de favoriser davantage encore le refoulement des sur-longueurs vers la région centrale.

Dans un exemple de réalisation, les régions d'extrémité définissent une surface d'enroulement ayant une forme arrondie.

L'invention concerne un procédé de fabrication d'une préforme fibreuse mettant en œuvre un outillage tel que décrit plus haut, comprenant au moins :
- l'enroulement de la texture fibreuse sur le support autour du premier axe d'enroulement en réduisant progressivement la distance entre les régions d'extrémité le long du deuxième axe à des valeurs prédéterminées lors de l'enroulement jusqu'à faire passer le support dans la configuration rétractée,
- une première compaction de l'enroulement dans les régions d'extrémité par le premier dispositif de compaction avec le support en configuration rétractée,
- le passage du support de la configuration rétractée à la configuration étendue, après la première compaction, en augmentant la distance entre les régions d'extrémité le long du deuxième axe de sorte à tendre l'enroulement dans la région centrale, et
- une deuxième compaction de l'enroulement dans la région centrale par le deuxième dispositif de compaction avec le support en configuration étendue.

Dans un exemple de réalisation, la première compaction comprend la réalisation de la compaction par le premier élément de compaction sur les extrémités distales de l'enroulement, puis la réalisation de la compaction sur les portions latérales des régions d'extrémité par le deuxième élément de compaction avec la composante de compaction dirigée vers la région centrale.

Dans un exemple de réalisation, la texture fibreuse est obtenue par tissage tridimensionnel.

Dans un exemple de réalisation, la texture fibreuse présente une zone de diminution d'épaisseur adjacente à chacune de ses extrémités.

Une telle caractéristique permet avantageusement de ne pas avoir de variation locale trop brutale du taux volumique de fibres pour les zones de démarrage et de fin d'enroulement.

L'invention concerne également un procédé de fabrication d'une pièce en matériau composite, comprenant au moins :
- la fabrication d'une préforme fibreuse par mise en œuvre d'un procédé tel que décrit plus haut, et
- la formation d'une matrice dans une porosité de la préforme fibreuse ainsi fabriquée afin d'obtenir la pièce en matériau composite.

La matrice peut typiquement être formée par introduction d'un matériau de matrice dans la porosité de la préforme fibreuse puis cuisson du matériau de matrice. On peut ainsi injecter une résine dans la porosité de la préforme fibreuse et réticuler cette résine afin d'obtenir la matrice. La pièce formée peut être en matériau composite à matrice organique, ou en variante en matériau composite à matrice céramique.

### Brève description des dessins

[Fig. 1] La figure 1 illustre, de manière schématique, la génération de sur-longueurs lors de la compaction d'un enroulement de couches de texture fibreuse ayant une forme locale circulaire.
[Fig. 2] La figure 2 illustre, de manière schématique, la génération de sur-longueurs lors de la compaction d'un enroulement de couches de texture fibreuse ayant une forme locale rectiligne.
[Fig. 3] La figure 3 représente, de manière schématique, le premier tour d'enroulement d'une texture fibreuse dans le cadre d'un exemple selon l'invention.
[Fig. 4] La figure 4 représente, de manière schématique, la texture fibreuse à la fin de son enroulement dans le cadre de l'exemple selon l'invention avec entre-axe de l'outillage en configuration rétractée.
[Fig. 5] La figure 5 représente, de manière schématique, la compaction de la texture fibreuse enroulée sur les régions d'extrémité du support par le premier dispositif de compaction dans le cadre de l'exemple selon l'invention, avec entre-axe de l'outillage en configuration rétractée.
[Fig. 6] La figure 6 représente le passage dans la configuration étendue et la compaction par le deuxième dispositif de compaction dans cette configuration dans le cadre de l'exemple selon l'invention.
[Fig. 7] La figure 7 représente, de manière schématique, un détail d'une variante de texture fibreuse pouvant être mise en œuvre dans le cadre de l'invention.
[Fig. 8] La figure 8 représente, de manière schématique, le passage en configuration rétractée selon une variante de l'invention.
[Fig. 9] La figure 9 représente, de manière schématique, une variante d'outillage selon l'invention adapté à la fabrication d'un carter de turbomachine.

### Description des modes de réalisation

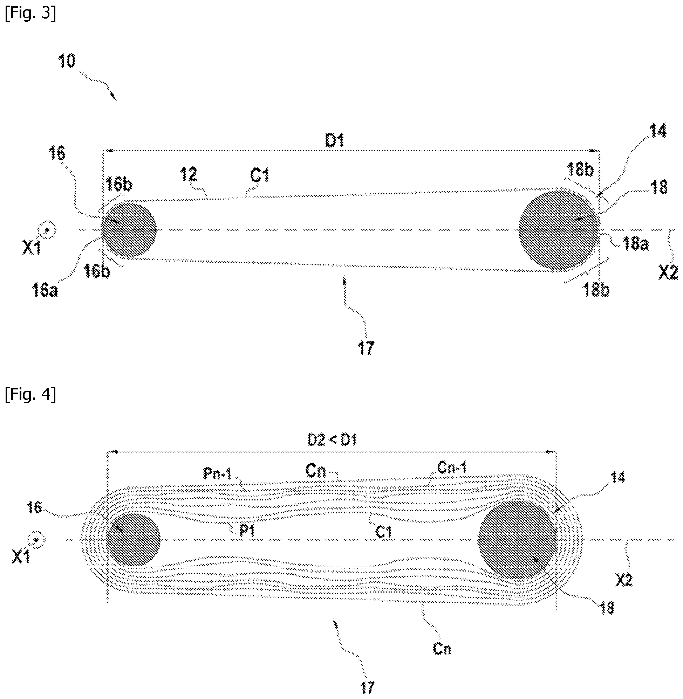

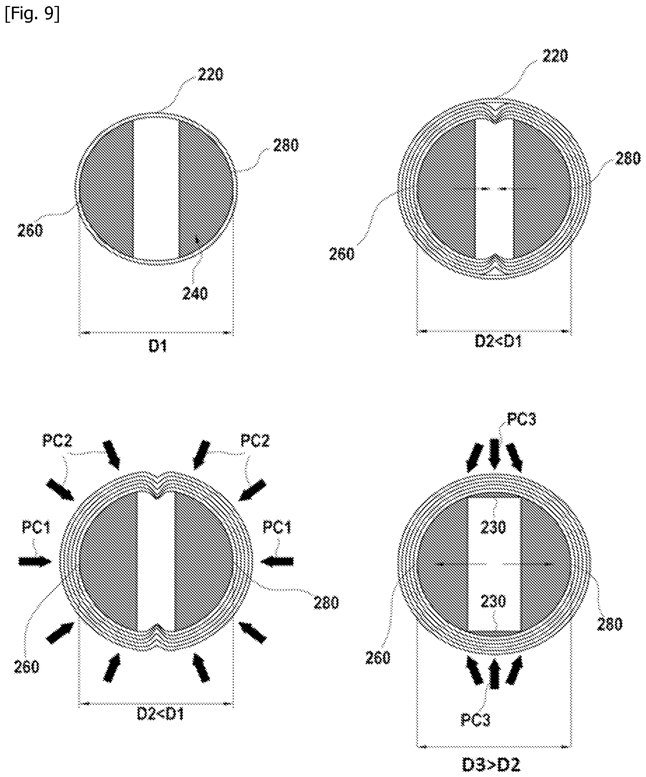

Les figures 3 à 6 illustrent un exemple selon l'invention destiné à produire une pièce de géométrie élancée, telle qu'une contre-fiche de train d'atterrissage ou une barre de frein. L'invention demeure applicable à d'autres types de pièce, comme il sera décrit plus bas en lien avec la figure 9.

Le passage ci-dessous détaille la détermination de la longueur de texture à enrouler à chaque tour ou fraction de tour, en fonction de la pièce considérée.

On connaît initialement les dimensions de la pièce à obtenir (après compactage), à savoir notamment sa longueur et son épaisseur ainsi que le taux volumique de fibres souhaité.

On connaît également l'épaisseur initiale de la texture (avant son compactage) qui est dite « foisonnée » comme indiqué plus haut avec un taux volumique de fibres généralement inférieur au taux volumique de fibres souhaité pour la pièce. Le nombre de tours de texture à réaliser correspond au nombre de tours pour obtenir l'épaisseur et le taux volumique de fibres souhaités dans la pièce finale en prenant en compte le foisonnement de la texture.

Les sur-longueurs générées dans la région centrale lors de la compaction au niveau des régions d'extrémité sont calculées géométriquement pour chaque couche de l'enroulement. Ces sur-longueurs varient en fonction de la position dans l'épaisseur de la couche enroulée comme indiqué plus haut et schématisé sur la figure 1. On en déduit alors la longueur à adopter lors de l'enroulement de chaque couche de texture, donc la distance séparant les régions d'extrémité à adopter pour chaque tour ou fraction de tour, de sorte à obtenir la longueur souhaitée pour la pièce finale sans pli de la texture après contribution des sur-longueurs générées lors de la compaction sur les régions d'extrémité.

Selon une étape préliminaire à l'enroulement, la texture fibreuse 12 est tout d'abord obtenue par des techniques connues en soi. On peut former la texture fibreuse 12 par tissage tridimensionnel, avec des propriétés du tissu qui demeurent invariantes sur toute la dimension de la texture 12 ou en faisant évoluer l'un au moins de l'armure de tissage, du ratio fils de chaîne / fils de trame ou encore les matériaux utilisés pour les fils tissés selon l'application envisagée.

L'enroulement de la texture 12 est initié avec l'outillage 10 dans la configuration illustrée à la figure 3. L'outillage 10 comprend généralement un support 14 autour duquel la texture 12 est destinée à être enroulée. Cet enroulement est réalisé autour d'un premier axe d'enroulement X1 normal au plan de la figure. Le support 14 définit des régions d'extrémité 16 et 18, ici au nombre de deux, qui sont espacées le long d'un deuxième axe X2 qui est transversal, par exemple perpendiculaire au premier axe X1. Les régions d'extrémité 16, 18, comprennent chacune une extrémité distale 16a, 18a formant ici un « nez » de ces régions 16, 18 ainsi que des portions latérales 16b, 18b, situées du côté d'une région centrale 17, avec l'extrémité distale 16a, 18a présente entre deux portions latérales 16b, 18b. Les régions d'extrémité 16, 18 définissent une boucle ou un coin autour duquel l'orientation de la texture 12 est modifiée, celle-ci faisant un demi-tour autour de chaque région d'extrémité 16, 18 lors de l'enroulement dans l'exemple illustré. Les régions d'extrémité 16, 18 peuvent présenter une forme convexe, comme illustré. Dans l'exemple illustré, les régions d'extrémité 16, 18 présentent, en section transversale par rapport au premier axe X1, une forme arrondie, par exemple sensiblement circulaire, ainsi que des dimensions différentes. On a représenté un exemple de support à deux régions d'extrémité 16, 18 mais on ne sort pas du cadre de l'invention lorsque le support présente plus de deux régions d'extrémité, définissant des coins autours desquels la texture est destinée à être enroulée. Dans l'exemple illustré, lors de l'enroulement de la texture 12, la région centrale 17 est dépourvue d'une portion sur laquelle repose la texture enroulée mais on ne sort pas du cadre de l'invention lorsque c'est le cas, comme il sera décrit plus bas.

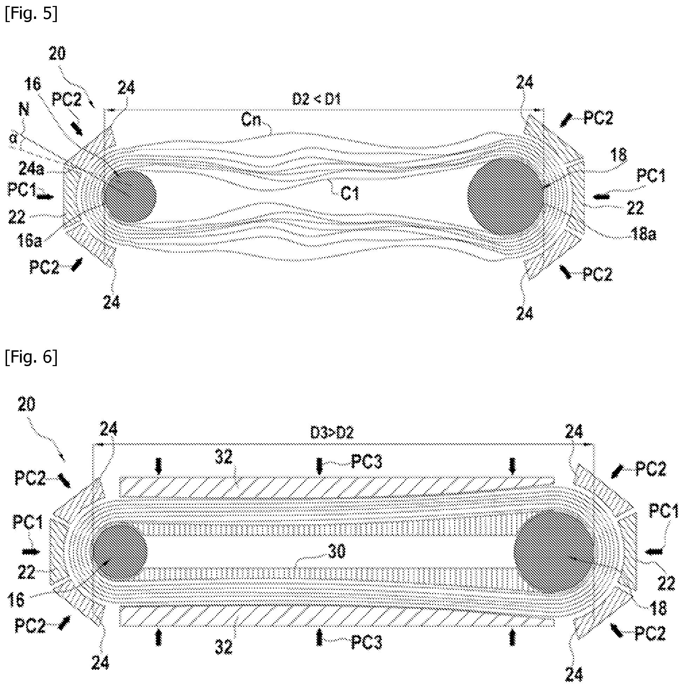

On réalise le premier tour aboutissant à l'enroulement d'une première couche C1 de la texture fibreuse 12 autour du support 14 en fixant la distance entre les régions d'extrémité 16, 18 à la valeur initiale D1 (figure 3). La distance entre les régions d'extrémité 16, 18 peut correspondre comme illustré à la distance entre les extrémités distales 16a et 18a mesurée le long du deuxième axe X2. On fixe initialement une extrémité de la texture au support 14, par exemple dans une partie de la région centrale 17, au moyen d'un dispositif de fixation de la préforme (non représenté), tel qu'un moyen de pincement. Cette fixation peut être réalisée par diverses méthodes, par exemple à l'aide d'un ruban adhésif ou par pincement. On peut également munir le support et la texture d'indicateurs de positionnement, par exemple en munissant la texture d'un élément de repérage destiné à recouvrir une position prédéterminée du support 14 pour confirmer que l'enroulement de la texture 12 est correctement effectué. En variante ou en combinaison, la texture 12 peut être munie d'éléments mécaniques destinés à coopérer avec des éléments mécaniques présents sur le support 14 afin de confirmer la bonne mise en place de la texture 12, comme un système de crochets et d'anneaux. Le premier tour formant la première couche C1 de l'enroulement est réalisé en maintenant la texture 12 sous tension de sorte à éviter l'apparition de pli, comme illustré sur la figure 3. Une fois le premier tour accompli, la première couche C1 peut être maintenue temporairement en place par exemple au niveau des régions d'extrémité 16, 18, voire sur les extrémités distales 16a, 18a. Ce maintien temporaire peut être effectué par tout dispositif adapté, par exemple par pincement, éventuellement au moyen de l'élément de compaction 22 (décrit en lien avec la figure 5 plus bas).

L'outillage 10 comprend un dispositif de déplacement (non représenté) qui est apte à modifier la forme du support lors de l'enroulement. Une fois le premier tour d'enroulement effectué, le dispositif de déplacement rapproche les régions d'extrémité le long du deuxième axe X2 et l'on fixe la distance entre ces régions 16, 18 à une valeur prédéterminée issue du modèle géométrique décrit plus haut pour procéder à l'enroulement de la deuxième couche de texture 12 d'une manière similaire à l'enroulement de la première couche C1, et l'on rapproche ainsi de suite les régions 16, 18 à chaque tour d'enroulement jusqu'à arriver à la configuration illustrée à la figure 4 après enroulement de la dernière couche Cn de texture 12. Cette configuration correspond à la configuration rétractée du support où la distance entre les régions d'extrémité 16, 18 est minimale à la valeur D2. Dans l'exemple considéré, le rapprochement des régions 16, 18 est fait à chaque tour mais on ne sort pas du cadre de l'invention si ce rapprochement est effectué à chaque fraction de tour, par exemple à chaque demi-tour. Le dispositif de déplacement est configuré pour permettre une réduction incrémentale de la distance entre les régions d'extrémité 16, 18 et comprend un mécanisme de blocage en position permettant de fixer la distance souhaitée entre les régions d'extrémité 16, 18 pour le tour considéré. L'homme du métier reconnaîtra que divers systèmes de déplacement peuvent convenir, employant par exemple des systèmes de déplacement à vis ou des vérins. On notera sur la figure 4 que la dernière couche Cn de l'enroulement peut, avant la compaction, ne pas présenter de plissement notable mais du fait de la réduction progressive de la distance entre les régions d'extrémité 16, 18 au fur et à mesure de l'enroulement les couches inférieures présentent elles des plissements une fois l'enroulement achevé (voir plissement P1 pour la première couche C1 et plissement Pn-1 pour l'avant-dernière couche Cn-1). Ces plissements sont d'autant plus marqués que la couche est à l'intérieur de l'enroulement.

Une fois l'enroulement achevé, le support est dans la configuration rétractée de la figure 4 et l'on initie à la compaction de la texture enroulée en plusieurs couches C1-Cn.

La compaction procède en plusieurs étapes et commence tout d'abord par la compaction de l'enroulement C1-Cn sur les régions d'extrémité 16, 18. Cette compaction est illustrée à la figure 5. Cette compaction met en œuvre un premier dispositif de compaction 20 qui comprend dans l'exemple illustré plusieurs éléments de compaction 22, 24 qui peuvent être de forme variée en fonction de la forme souhaitée pour l'enroulement comprimé, et par exemple sous la forme de blocs ou de pavés. Le premier dispositif de compaction 20 compacte l'enroulement C1-Cn alors que le support est fixé dans la configuration rétractée, comme illustré à la figure 5. Dans l'exemple illustré, cette compaction est réalisée par parties en effectuant tout d'abord la compaction de l'enroulement C1-Cn sur les extrémités distales 16a, 18a à l'aide d'un premier élément de compaction 22 (application d'une pression de compaction selon la flèche PC1), puis la compaction sur les portions latérales 16b, 18b à l'aide d'un deuxième élément de compaction 24 (application d'une pression de compaction selon la flèche PC2 avec une composante vers la région centrale) distinct du premier élément de compaction 22. Le deuxième élément de compaction 24 présente au moins une face latérale 24a qui fait un angle α non nul avec la normale N de l'enroulement C1-Cn prise au niveau de cette face 24a. La compaction sur les régions d'extrémité 16, 18 peut être effectuée de manière symétrique par rapport au deuxième axe X2. On ne sort pas du cadre de l'invention si la compaction au niveau de l'extrémité distale 16a, 18a et des portions latérales 16b, 18b est effectuée simultanément, avec un même élément de compaction sur chaque région d'extrémité 16, 18, et non avec plusieurs éléments 22, 24 distincts comme illustré. D'une manière générale, on notera que la compaction peut être réalisée en imposant une pression de compaction prédéfinie ou en imposant un déplacement prédéfini.

La figure 5 illustre les sur-longueurs générées pour les différentes couches C1-Cn de l'enroulement suite à la compaction des régions d'extrémité 16, 18. Comme indiqué précédemment, on constate une génération de sur-longueur plus élevée pour la dernière couche Cn que pour la première C1.

Une fois la compaction réalisée sur les régions d'extrémité 16, 18, ces régions 16, 18 sont éloignées à nouveau par le système de déplacement jusqu'à être séparées par une troisième distance D3 supérieure à la deuxième distance D2 (figure 6). Le support passe dans ce cas en configuration étendue. La troisième distance D3 peut correspondre à une dimension souhaitée de la pièce à obtenir, par exemple à la longueur souhaitée pour celle-ci. On notera que la troisième distance D3 peut être supérieure à la première distance D1 initiale de sorte à tenir compte de la sur-longueur générée au niveau de la première couche C1 lors de la compaction par le premier dispositif de compaction. Dans la configuration étendue, les couches C1-Cn sont à nouveau tendues sur la région centrale 17 de sorte à supprimer les plissements apparus précédemment. On procède alors à la compaction avec le deuxième dispositif de compaction 32. Cette compaction est précédée dans l'exemple illustré par l'introduction d'une base 30 destinée à supporter l'enroulement C1-Cn lors de la compaction par le deuxième dispositif de compaction 32. On applique ensuite la compaction selon les flèches PC3 de sorte à conformer l'enroulement C1-Cn sur la région centrale 17. On notera que l'on peut maintenir la compaction par le premier dispositif de compaction 20 durant cette conformation, comme illustré à la figure 6, ou en variante relâcher cette compaction. L'outillage 10 comprend une unité de commande (non représentée) apte à commander le dispositif de déplacement et les dispositifs de compaction 20, 32.

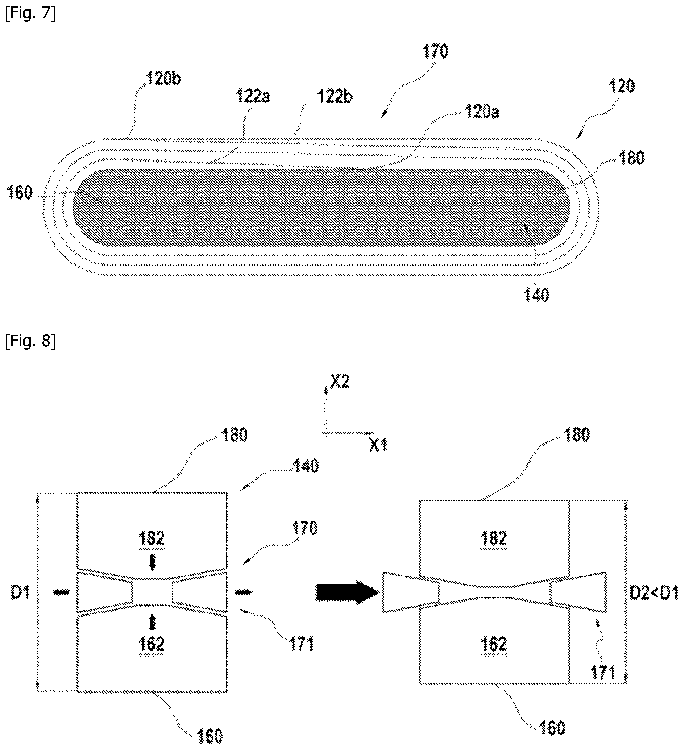

On vient de décrire un exemple de formation d'un renfort fibreux d'une pièce en matériau composite ayant les dimensions souhaitées avec un taux volumique de fibres désiré. La description qui suit, en lien avec les figures 7 et 8, s'attache à décrire des variantes selon l'invention pour la fabrication de pièces de géométrie également élancée.

Selon la variante de la figure 7, la texture enroulée 120 sur le support 140 ne présente pas une épaisseur constante. La texture est initialement fixée au support pour réaliser son enroulement à une première extrémité longitudinale 120a. L'épaisseur de la texture est croissante à partir de la première extrémité 120a puis décroît en direction d'une deuxième extrémité longitudinale 120b. La texture présente des zones de diminution d'épaisseur 122a et 122b qui sont adjacentes aux extrémités 120a et 120b et présentant une épaisseur réduite en allant vers ces extrémités 120a et 120b. La zone 122b se superpose avantageusement à la zone 122a de sorte à avoir la même quantité de fibres dans l'armure de tissage tout autour de la pièce, une fois l'enroulement achevé. La figure 7 illustre également le cas d'un support 140 s'étendant sur la région centrale 170 entre les régions d'extrémité 160, 180 dès le début de l'enroulement. Sur cette figure, il a été représenté un support 140 de forme sensiblement rectiligne sur la région centrale 170 mais on ne sort pas du cadre de l'invention lorsque ce n'est pas le cas, le support peut présenter en variante dans cette région une forme concave, par exemple en diabolo, en section transversale par rapport à l'axe d'enroulement X1. La figure 8 montre le déplacement relatif des régions d'extrémité 160, 180 selon une alternative. Le support 140 peut comprendre deux portions 162 et 182 comprenant chacune l'une des régions d'extrémité 160 ou 180 et s'étendant sur la région centrale 170, ainsi qu'un dispositif d'ajustement composé de deux éléments 171 mobiles selon l'axe d'enroulement X1 afin de conférer au dispositif d'ajustement une largeur évolutive selon cet axe. En éloignant les éléments 171 le long de l'axe d'enroulement X1, on permet le rapprochement des portions 162 et 182 et donc des régions d'extrémité et le passage à la configuration rétractée. Le passage à la configuration étendue est effectué par un mouvement inverse.

La matrice est ensuite formée dans la porosité du renfort fibreux par des techniques connues en soi, par exemple par injection de résine puis réticulation de cette dernière. Si cela est souhaité, on notera que l'on peut adjoindre au renfort fibreux enroulé formé par la technique de l'invention un renfort fibreux additionnel, par exemple dans un espace intérieur délimité par le renfort fibreux enroulé, et ensuite procéder à une densification conjointe de ces deux renforts fibreux afin d'obtenir la pièce en matériau composite. En variante, ces deux renforts fibreux peuvent être densifiés séparément et reliés ensuite pour former la pièce.

On vient de décrire, en lien avec les figures 3 à 8, la fabrication de pièces de géométrie élancée. La figure 9 qui va à présent être décrite concerne le cas d'une pièce de géométrie sensiblement circulaire, en l'occurrence un carter de turbomachine.

Selon l'exemple de la figure 9, on utilise un support 240 comprenant deux cylindres tronqués définissant chacun une région d'extrémité 260 et 280. On commence l'enroulement de la texture 220 avec les régions d'extrémité 260 et 280 espacées d'une première distance D1. Les régions d'extrémité 260 et 280 sont progressivement rapprochées au fur et à mesure de l'enroulement de manière similaire à ce qui a été décrit plus haut. Une fois dans la configuration rétractée (distance entre les régions d'extrémité 260, 280 égale à D2), on réalise la compaction PC1, PC2 sur les régions d'extrémité 260, 280 comme décrit plus haut. Le support passe ensuite en configuration étendue (distance D3 supérieure à D2 séparant les régions d'extrémité 260, 280) et la compaction PC3 est réalisée sur la région centrale après avoir ajouté un support 230 pour soutenir l'enroulement.

L'homme du métier reconnaîtra que l'invention peut trouver une application à d'autres types de pièces, comme d'autres pièces de turbomachine notamment des aubes directrices de sortie.

## Revendications

1. Outillage (10) pour l'enroulement d'une texture fibreuse (12 ; 120 ; 220), comprenant au moins un support (14 ; 140 ; 240) sur lequel la texture fibreuse est destinée à être enroulée autour d'un premier axe (X1) d'enroulement, le support ayant au moins deux régions d'extrémité (16 ; 160 ; 260 ; 18 ; 180 ; 280) espacées le long d'un deuxième axe (X2) transversal au premier axe, **caractérisé en ce qu'**il comprend un dispositif de déplacement configuré pour modifier la forme du support entre une configuration rétractée et une configuration étendue en rapprochant progressivement ou en éloignant les régions d'extrémité le long du deuxième axe, et **en ce qu'**il comprend un premier dispositif de compaction (20) apte à réaliser une compaction (PC1 ; PC2) sur les régions d'extrémité au moins dans la configuration rétractée et un deuxième dispositif de compaction (32), distinct du premier dispositif de compaction, apte à réaliser une compaction (PC3) sur une région centrale (17) située entre les régions d'extrémité dans la configuration étendue, dans lequel chaque région d'extrémité comprend une extrémité distale (16a ; 18a) et deux portions latérales (16b ; 18b) situées de part et d'autre de l'extrémité distale et situées du côté de la région centrale, et dans lequel le premier dispositif de compaction comprend un premier élément (22) de compaction apte à réaliser la compaction (PC1) sur l'extrémité distale de chaque région d'extrémité, et un deuxième élément (24) de compaction apte à réaliser la compaction (PC2) sur les portions latérales de chaque région d'extrémité avec une composante de compaction dirigée vers la région centrale.

2. Outillage selon la revendication 1, dans lequel le deuxième élément de compaction (24) présente au moins une face latérale (24a) qui fait un angle (α) non nul avec la normale (N) au support (14 ; 140 ; 240) prise au niveau de cette face.

3. Outillage (10) selon la revendication 1 ou 2, dans lequel le premier dispositif de compaction (20) est configuré pour réaliser la compaction (PC2) par le deuxième élément (24) de compaction après réalisation de la compaction (PC1) par le premier élément (22) de compaction.

4. Outillage (11) selon l'une quelconque des revendications 1 à 3, dans lequel les régions d'extrémité (16 ; 160 ; 260 ; 18 ; 180 ; 280) définissent une surface d'enroulement ayant une forme arrondie.

5. Procédé de fabrication d'une préforme fibreuse mettant en œuvre un outillage (10) pour l'enroulement d'une texture fibreuse (12 ; 120 ; 220), comprenant au moins un support (14 ; 140 ; 240) sur lequel la texture fibreuse est destinée à être enroulée autour d'un premier axe (X1) d'enroulement, le support ayant au moins deux régions d'extrémité (16 ; 160 ; 260 ; 18 ; 180 ; 280) espacées le long d'un deuxième axe (X2) transversal au premier axe, l'outillage comprenant un dispositif de déplacement configuré pour modifier la forme du support entre une configuration rétractée et une configuration étendue en rapprochant progressivement ou en éloignant les régions d'extrémité le long du deuxième axe, et comprenant un premier dispositif de compaction (20) apte à réaliser une compaction (PC1 ; PC2) sur les régions d'extrémité au moins dans la configuration rétractée et un deuxième dispositif de compaction (32), distinct du premier dispositif de compaction, apte à réaliser une compaction (PC3) sur une région centrale (17) située entre les régions d'extrémité dans la configuration étendue,
le procédé comprenant au moins :
- l'enroulement de la texture fibreuse sur le support autour du premier axe d'enroulement en réduisant progressivement la distance entre les régions d'extrémité le long du deuxième axe à des valeurs prédéterminées lors de l'enroulement jusqu'à faire passer le support dans la configuration rétractée,
- une première compaction de l'enroulement dans les régions d'extrémité par le premier dispositif de compaction avec le support en configuration rétractée,
- le passage du support de la configuration rétractée à la configuration étendue, après la première compaction, en augmentant la distance entre les régions d'extrémité le long du deuxième axe de sorte à tendre l'enroulement dans la région centrale, et
- une deuxième compaction de l'enroulement dans la région centrale par le deuxième dispositif de compaction avec le support en configuration étendue.

6. Procédé selon la revendication 5, dans lequel la première compaction comprend la réalisation de la compaction (PC1) par le premier élément de compaction (22) sur les extrémités distales (16a ; 18a) des régions d'extrémité, puis la réalisation de la compaction (PC2) sur les portions latérales (16b ; 18b) des régions d'extrémité par le deuxième élément de compaction (24) avec la composante de compaction dirigée vers la région centrale (17).

7. Procédé selon l'une quelconque des revendications 5 ou 6, dans lequel la texture fibreuse (12 ; 120 ; 220) est obtenue par tissage tridimensionnel.

8. Procédé selon l'une quelconque des revendications 5 à 7, dans lequel la texture fibreuse (12 ; 120 ; 220) présente une zone de diminution d'épaisseur (122a ; 122b) adjacente à chacune de ses extrémités (120a ; 120b).

9. Procédé de fabrication d'une pièce en matériau composite, comprenant au moins :
- la fabrication d'une préforme fibreuse par mise en œuvre d'un procédé selon la revendication 7 ou 8, et
- la formation d'une matrice dans une porosité de la préforme fibreuse ainsi fabriquée afin d'obtenir la pièce en matériau composite.

## Patentansprüche

1. Werkzeug (10) zum Aufwickeln einer Fasertextur (12; 120; 220), umfassend zumindest einen Träger (14; 140; 240), auf welchem die Fasertextur um eine erste Wickelachse (X1) herum aufgewickelt werden soll, wobei der Träger zumindest zwei Endregionen (16; 160; 260; 18; 180; 280) aufweist, die entlang einer zweiten Achse (X2) quer zur ersten Achse beabstandet sind,
**dadurch gekennzeichnet, dass** es eine Vorrichtung zur Verschiebung umfasst, die dazu ausgestaltet ist, die Form des Trägers zwischen einer eingezogenen Konfiguration und einer ausgefahrenen Konfiguration zu modifizieren, indem sie die Endregionen entlang der zweiten Achse progressiv einander annähert oder von einander entfernt, und dass es eine erste Vorrichtung zur Verdichtung (20) umfasst, die dazu geeignet ist, eine Verdichtung (PC1; PC2) an den Endregionen zumindest in der eingezogenen Konfiguration durchzuführen, und eine zweite Vorrichtung zur Verdichtung (32), die sich von der ersten Vorrichtung zur Verdichtung unterscheidet und dazu geeignet ist, eine Verdichtung (PC3) an einer zentralen Region (17) durchzuführen, die sich in der ausgefahrenen Konfiguration zwischen den Endregionen befindet, wobei jede Endregion ein distales Ende (16a; 18a) und zwei seitliche Abschnitte (16b; 18b) umfasst, die sich auf beiden Seiten des distalen Endes befinden und sich seitlich von der zentralen Region befinden, und wobei die erste Vorrichtung zur Verdichtung ein erstes Element (22) zur Verdichtung umfasst, das dazu geeignet ist, die Verdichtung (PC1) an dem distalen Ende jeder Endregion durchzuführen, und ein zweites Element (24) zur Verdichtung, das dazu geeignet ist, die Verdichtung (PC2) an den seitlichen Abschnitten jeder Endregion durchzuführen, mit einer zur zentralen Region hin gerichteten Komponente zur Verdichtung.

2. Werkzeug nach Anspruch 1, wobei das zweite Element zur Verdichtung (24) mindestens eine Seitenfläche (24a) aufweist, die einen Winkel (α) ungleich Null mit der Senkrechten (N) auf den Träger (14; 140; 240) bildet, die an dieser Fläche genommen wird.

3. Werkzeug (10) nach Anspruch 1 oder 2, wobei die erste Vorrichtung zur Verdichtung (20) dazu ausgestaltet ist, die Verdichtung (PC2) durch das zweite Element (24) zur Verdichtung nach der Durchführung der Verdichtung (PC1) durch das erste Element (22) zur Verdichtung durchzuführen.

4. Werkzeug (11) nach einem der Ansprüche 1 bis 3, wobei die Endregionen (16; 160; 260; 18; 180; 280) eine Wickelfläche definieren, die eine abgerundete Form aufweist.

5. Verfahren zur Herstellung einer Faservorform, das ein Werkzeug (10) zum Aufwickeln einer Fasertextur (12; 120; 220) einsetzt, umfassend zumindest einen Träger (14; 140; 240), auf welchem die Fasertextur um eine erste Wickelachse (X1) herum aufgewickelt werden soll, wobei der Träger zumindest zwei Endregionen (16; 160; 260; 18; 180; 280) aufweist, die entlang einer zweiten Achse (X2) quer zur ersten Achse beabstandet sind, wobei das Werkzeug eine Vorrichtung zur Verschiebung umfasst, die dazu ausgestaltet ist, die Form des Trägers zwischen einer eingezogenen Konfiguration und einer ausgefahrenen Konfiguration zu modifizieren, indem sie die Endregionen entlang der zweiten Achse progressiv einander annähert oder von einander entfernt, und eine erste Vorrichtung zur Verdichtung (20) umfasst, die dazu geeignet ist, eine Verdichtung (PC1; PC2) an den Endregionen zumindest in der eingezogenen Konfiguration durchzuführen, und eine zweite Vorrichtung zur Verdichtung (32), die sich von der ersten Vorrichtung zur Verdichtung unterscheidet und dazu geeignet ist, eine Verdichtung (PC3) an einer zentralen Region (17) durchzuführen, die sich in der ausgefahrenen Konfiguration zwischen den Endregionen befindet,
wobei das Verfahren zumindest umfasst:
- das Aufwickeln der Fasertextur auf den Träger um die erste Wickelachse herum, indem der Abstand zwischen den Endregionen entlang der zweiten Achse während des Aufwickelns progressiv auf vorbestimmte Werte reduziert wird, bis der Träger in die eingezogene Konfiguration übergeht,
- eine erste Verdichtung der Wicklung in den Endregionen durch die erste Vorrichtung zur Verdichtung, wobei sich der Träger in der eingezogenen Konfiguration befindet,
- der Übergang des Trägers aus der eingezogenen Konfiguration in die ausgefahrene Konfiguration, nach der ersten Verdichtung, indem der Abstand zwischen den Endregionen entlang der zweiten Achse so vergrößert wird, dass die Wicklung in der zentralen Region gespannt wird, und
- eine zweite Verdichtung der Wicklung in der zentralen Region durch die zweite Vorrichtung zur Verdichtung, wobei sich der Träger in der ausgefahrenen Konfiguration befindet.

6. Verfahren nach Anspruch 5, wobei die erste Verdichtung die Durchführung der Verdichtung (PC1) durch das erste Element zur Verdichtung (22) an den distalen Enden (16a; 18a) der Endregionen umfasst, anschließend die Durchführung der Verdichtung (PC2) an den seitlichen Abschnitten (16b; 18b) der Endregionen durch das zweite Element zur Verdichtung (24) mit der zur zentralen Region (17) hin gerichteten Komponente zur Verdichtung.

7. Verfahren nach einem der Ansprüche 5 oder 6, wobei die Fasertextur (12; 120; 220) durch dreidimensionale Verwebung erhalten wird.

8. Verfahren nach einem der Ansprüche 5 bis 7, wobei die Fasertextur (12; 120; 220) eine Zone der Dickenverringerung (122a; 122b) benachbart zu jedem ihrer Enden (120a; 120b) aufweist.

9. Verfahren zur Herstellung eines Teils aus Verbundmaterial, umfassend zumindest:
- die Herstellung einer Faservorform durch Umsetzung eines Verfahrens nach Anspruch 7 oder 8, und
- die Bildung einer Matrix in einer Porosität der so hergestellten Faservorform um das Teil aus Verbundmaterial zu erhalten.

## Claims

1. A tooling (10) for winding a fibrous fabric (12; 120; 220), comprising at least one support (14; 140; 240) on which the fibrous fabric is intended to be wound about a first winding axis (X1), the support having at least two end regions (16; 160; 260; 18; 180; 280) spaced apart along a second axis (X2) transverse to the first axis,
**characterized in that** it comprises a motion device configured to modify the shape of the support between a retracted configuration and extended configuration by gradually drawing closer or drawing apart the end regions along the second axis, and **in that** it comprises a first compaction device (20) able to perform compaction (PC1; PC2) on the end regions at least in the retracted configuration and a second compaction device (32), differing from the first compaction device, able to perform compaction (PC3) on a central region (17) lying between the end regions in the extended configuration, and wherein each end region comprises a distal end (16a; 18a) and two side portions (16b; 18b) positioned either side of the distal end and located on the side of the central region, and wherein the first compaction device comprises a first compacting element (22) able to perform compaction (PC1) on the distal end of each end region and a second compacting element (24) able to perform compaction (PC2) on the side portions of each end region with a compacting component directed towards the central region.

2. The tooling according to claim 1, wherein the second compacting element (24) has at least one lateral surface (24a) forming a nonzero angle (a) with the normal (N) to the support (14; 140; 240) at this surface.

3. The tooling (10) according to claim 1 or 2, wherein the first compaction device (20) is configured to carry out compaction (PC2) by the second compacting element (24) after performing compaction (PC1) by the first compacting element (22).

4. The tooling (10) according to any of claims 1 to 3, wherein the end regions (16; 160; 260; 18; 180; 280) define a winding surface having a rounded shape.

5. A method for manufacturing a fibrous preform using tooling (10) for winding a fibrous fabric (12; 120; 220), comprising at least one support (14; 140; 240) on which the fibrous fabric is intended to be wound about a first winding axis (X1), the support having at least two end regions (16; 160; 260; 18; 180; 280) spaced apart along a second axis (X2) transverse to the first axis, the tooling comprising a motion device configured to modify the shape of the support between a retracted configuration and an extended configuration by gradually drawing closer or drawing apart the end regions along the second axis, and comprising a first compaction device (20) able to perform compaction (PC1; PC2) on the end regions at least in the retracted configuration and a second compaction device (32), differing from the first compaction device, able to perform compaction (PC3) on a central region (17) lying between the end regions in the extended configuration,
the method at least comprising:
- winding the fibrous fabric on the support about the first winding axis by gradually reducing the distance between the end regions along the second axis to predetermined values during winding until the support is caused to change over to the retracted configuration;
- first compaction of the winding at the end regions by the first compaction device with the support in retracted configuration;
- changeover of the support from the retracted configuration to the extended configuration, after the first compaction, by increasing the distance between the end regions along the second axis so as to tauten the winding in the central region; and
- second compaction of the winding in the central region by the second compaction device with the support in extended configuration.

6. The method according to claim 5 wherein the first compaction comprises performing of compaction (PC1) by the first compacting element (22) on the distal ends (16a; 18a) of the end regions, followed by performing of compaction (PC2) on the side portions (16b; 18b) of the end regions by the second compacting element (24) with the compacting component directed towards the central region (17).

7. The method according to any of claims 5 and 6, wherein the fibrous fabric (12; 120; 220) is obtained by three-dimensional weaving.

8. The method according to any of claims 5 to 7, wherein the fibrous fabric (12; 120; 220) has a zone of decreasing thickness (122a; 122b) adjacent to each of the ends thereof (120a; 120b).

9. A method for manufacturing a part in composite material comprising at least:
- fabricating a fibrous preform by implementing a method according to claim 7 or 8, and
- forming a matrix in a porosity of the fibrous preform just fabricated to obtain the part in composite material.
